# EUROPEAN PATENT APPLICATION

(11) **EP 4 354 543 A1**
(43) Date of publication of application: **17.04.2024**
(21) Application number: 23202923.1
(22) Date of filing: 11.10.2023
(51) Int. Cl.: H01M 4/36, H01M 4/38, H01M 4/48, H01M 4/525, H01M 4/587, H01M 10/0525, H01M 10/0567, H01M 10/42

(54) **ELECTROCHEMICAL DEVICE AND ELECTRONIC DEVICE**

(30) Priority: 13.10.2022 CN 202211250451
(71) Applicant: Ningde Amperex Technology Ltd., Ningde City, Fujian 352100 (CN)
(72) Inventor: ZHANG, Lilan, Ningde City, Fujian Province, People s Republic of China, 352100 (CN); LIN, Mengyan, Ningde City, Fujian Province, People s Republic of China, 352100 (CN); ZHANG, Shan, Ningde City, Fujian Province, People s Republic of China, 352100 (CN); TANG, Chao, Ningde City, Fujian Province, People s Republic of China, 352100 (CN)
(74) Representative: Icosa

(57) **Abstract**

An electrochemical device includes a positive electrode plate and an electrolytic solution. The electrolytic solution includes a phosphorus additive represented by Formula I: 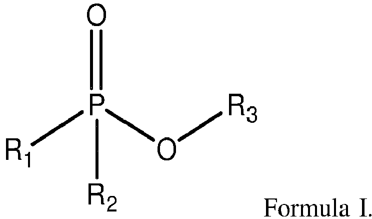 A mass percent of the phosphorus additive represented by Formula I in the electrolytic solution is A%. The electrolytic solution further includes a first additive. The first additive includes at least one of fluoroethylene carbonate or vinylene carbonate. The positive electrode plate includes a positive active material; the positive active material includes an M element; the M element includes at least one of Al, Mg, Ti, or B; a mass percent of the M element in the positive active material is X%; and 0.0001 ≤ X/A ≤ 40. The electrochemical device is highly stable to thermal shocks.

## Description

### TECHNICAL FIELD

This application relates to the electrochemical field, and in particular, to an electrochemical device and an electronic device.

### BACKGROUND

With the popularization of mobile phones, electronic products, and electric vehicles in daily life, more and more attention is paid to the safety performance of electrochemical devices. Some electrochemical devices need to undergo thermal shock tests before mass production to avoid safety accidents such as explosions during use. The temperature in a thermal shock test is usually higher than 100 °C. Such a high temperature greatly reduces stability of a cathode electrode interphase, and makes an electrolytic solution decompose massively at a positive electrode plate. At the same time, a positive active material layer of the positive electrode plate may collapse drastically, and a large amount of metal ions are deposited at a negative electrode plate to cause failure of an anode electrode interphase. Consequently, the electrolytic solution reacts violently at the anode electrode interphase simultaneously. Ultimately, the heat accumulated continuously at the cathode and anode electrode interphases causes a battery to burn or explode.

### SUMMARY

This application provides an electrochemical device and an electronic device to solve the problem that the electrochemical device is not stable to thermal shocks.

According to a first aspect, this application provides an electrochemical device. The electrochemical device includes a positive electrode plate and an electrolytic solution.

In the electrochemical device: (1) The electrolytic solution includes a phosphorus additive represented by Formula I:

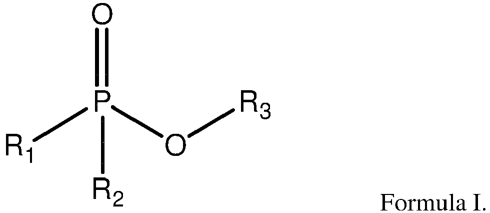

In the Formula I, R₁ to R₃ each are one independently selected from halogen, a cyano group, a sulfonic acid group, an aldehyde group, a silicon group, a substituted C₁ to C₆ alkoxy, an unsubstituted C₁ to C₆ alkoxy, a substituted C₁ to C₆ alkyl, an unsubstituted C₁ to C₆ alkyl, a substituted C₂ to C₆ alkenyl, an unsubstituted C₂ to C₆ alkenyl, a substituted C₂ to C₆ alkynyl, an unsubstituted C₂ to C₆ alkynyl, a substituted C₆ to C₁₂ aryl, or an unsubstituted C₆ to C₁₂ aryl, where when substituted, a substituent is halogen.

A mass percent of the phosphorus additive represented by Formula I in the electrolytic solution is A%.
(2) the electrolytic solution further includes a first additive, and the first additive includes at least one of fluoroethylene carbonate or vinylene carbonate.
(3) the positive electrode plate includes a positive active material; the positive active material includes an M element; the M element includes at least one of Al, Mg, Ti, or B; a mass percent of the M element in the positive active material is X%; and A and X satisfy the following condition: 0.0001 ≤ X/A ≤ 40.

In some embodiments, the phosphorus additive represented by Formula I includes at least one of the following compounds:

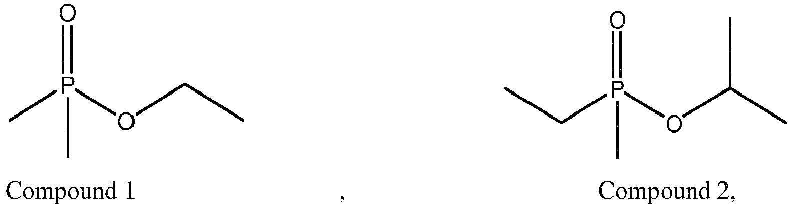

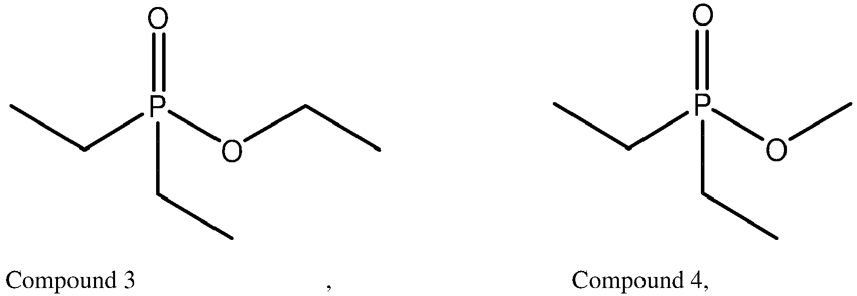

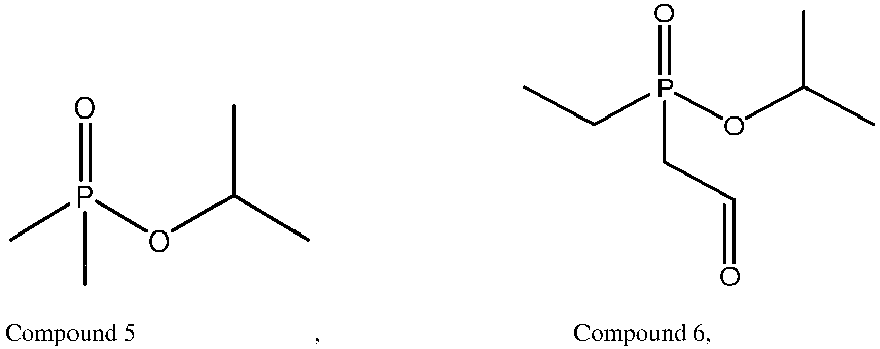

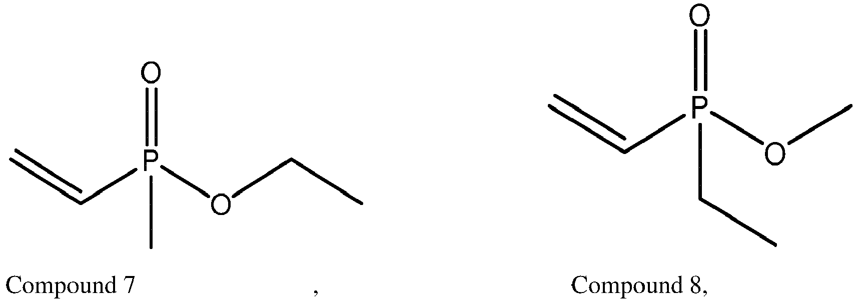

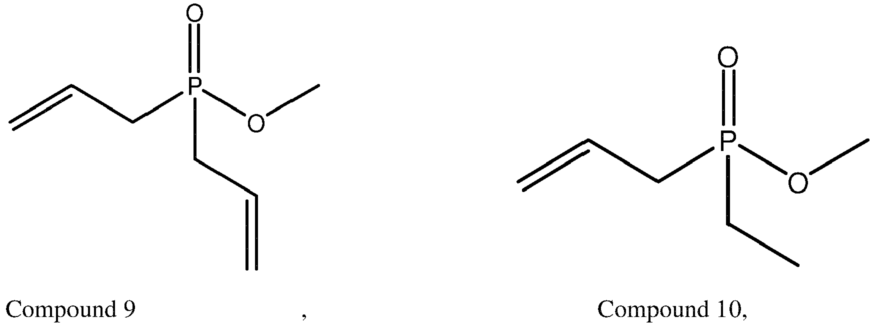

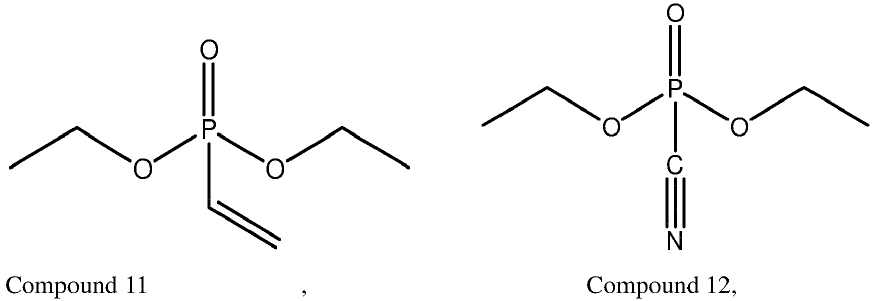

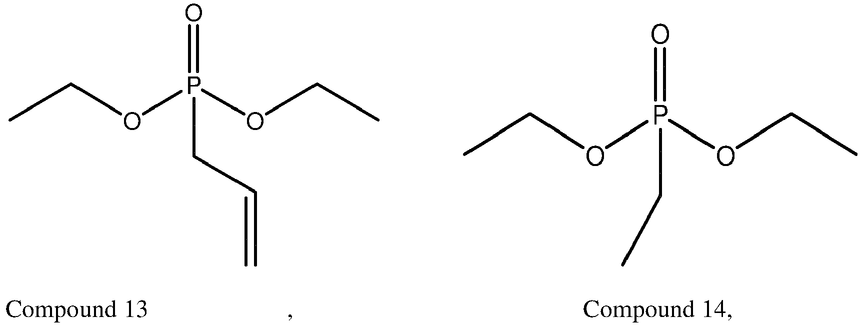

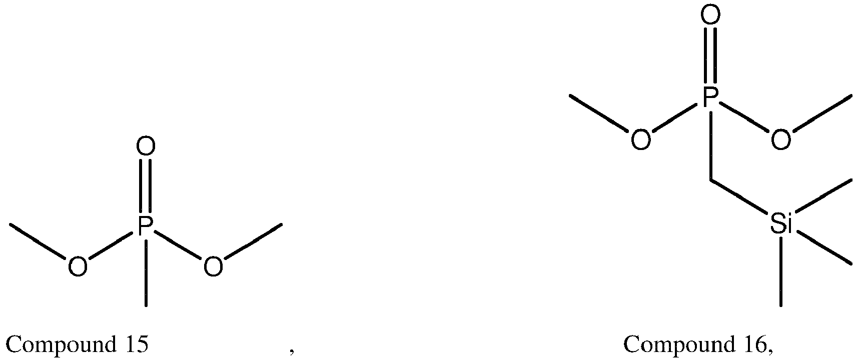

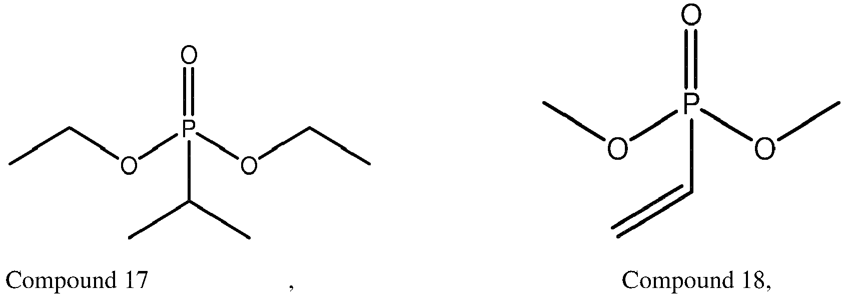

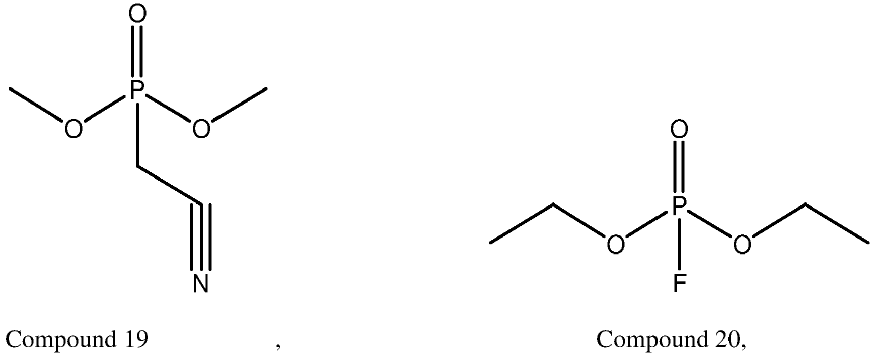

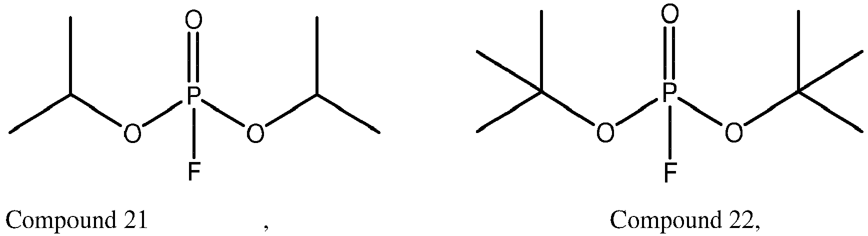

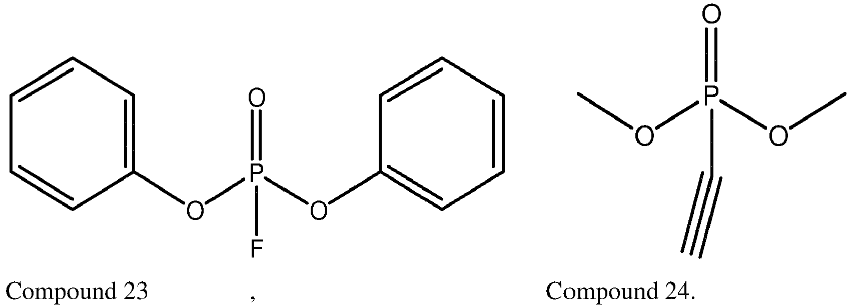

In some embodiments, the mass percent A% of the phosphorus additive in the electrolytic solution satisfies the following condition: 0.05 ≤ A ≤ 10.

In some embodiments, the electrolytic solution further includes a second additive. The second additive includes at least one of polynitrile compounds. A number of cyano groups in the polynitrile compounds is 2 to 4.

In some embodiments, the polynitrile compounds include at least one of a dinitrile or a trinitrile.

The dinitrile includes at least one of succinonitrile, glutaronitrile, adiponitrile, pimelonitrile, suberonitrile, 1,5-dicyanopentane, 1,6-dicyanohexane, tetramethylsuccinonitrile, or ethylene glycol bis(propionitrile) ether.

The trinitrile includes at least one of 1,3,5-pentanetricarbonitrile, 1,2,3-propanetricarbonitrile, 1,3,6-hexanetricarbonitrile, 1,2,6-hexanetricarbonitrile, or 1,2,3-tris(2-cyanoethoxy)propane.

In some embodiments, a mass percent of the second additive in the electrolytic solution is C%, and C satisfies the following condition: 0.5 ≤ C ≤ 10.

In some embodiments, a mass percent of the first additive in the electrolytic solution is B%, and A, B, and C satisfy the following condition: A + C ≤ 5B.

In some embodiments, the electrochemical device further includes a negative electrode plate. The negative electrode plate includes a negative active material. The negative active material includes a silicon material and a carbon material on a surface of the silicon material.

According to a second aspect, this application provides an electronic device, including the electrochemical device.

The electrochemical device and electronic device according to some embodiments of this application achieve at least the following beneficial effects:

The phosphorus additive represented by Formula I is added in the electrolytic solution, and the phosphorus additive can participate in forming a thermally stable inorganic CEI film at a cathode electrode interphase to inhibit decomposition of the electrolytic solution in a high-temperature environment. Together with the first additive added in the electrolytic solution, the phosphorus additive can simultaneously inhibit the disruption caused by the metal deposition at an anode electrode interphase to the SEI film at the negative electrode. In addition, the positive active material with the M element can improve lattice stability of the positive active material and inhibit corrosion of the positive electrode material caused by acidic substances generated after decomposition of the phosphorus additive. The phosphorus additive represented by Formula I, the first additive, and the M element coordinate synergistically to improve the thermal stability of the electrochemical device under a high temperature.

The phosphorus additive represented by Formula I is prone to decompose to generate acidic substances under high-temperature conditions, and is corrosive to the positive active material to some extent. Therefore, by controlling the phosphorus additive represented by Formula I and the M element to satisfy the condition of 0.0001 ≤ X/A ≤ 40, this application can exert the synergistic effect between the phosphorus additive represented by Formula I and the M element, and enhance the performance of resistance to thermal shock significantly.

The electrolytic solution prepared herein further includes a second additive. The second additive can be adsorbed onto the cathode electrode interphase to effectively protect the positive active material and reduce side reactions at the cathode electrode interphase. However, under high-temperature conditions, both the phosphorus additive and the second additive deteriorate the anode electrode interphase to varying degrees. The first additive can effectively forms a solid-electrolyte interphase film (that is, SEI film) on the surface of the negative electrode. By controlling the mass percent of the phosphorus additive, the first additive, and the second additive to satisfy the relation A + C ≤ 2B, this application can effectively reduce the deterioration of the anode electrode interphase caused by the phosphorus additive and the second additive.

### DETAILED DESCRIPTION

To make the purposes, technical solutions, and advantages of this application clearer, the following describes this application in more detail with reference to embodiments. Understandably, the specific embodiments described herein are merely intended to explain this application, but are not intended to limit this application.

During a thermal shock test on an electrochemical device, the temperature in the thermal shock test is usually higher than 100 °C. Such a high temperature greatly reduces stability of a cathode electrode interphase, and makes an electrolytic solution decompose massively at a positive electrode plate. At the same time, a positive active material layer of the positive electrode plate may collapse drastically, and a large amount of metal ions are deposited at a negative electrode plate to cause failure of an anode electrode interphase. Consequently, the electrolytic solution reacts violently at the anode electrode interphase simultaneously. Ultimately, the heat accumulated continuously at the cathode and anode electrode interphases causes a battery to burn or explode.

An embodiment of this application provides an electrochemical device. From the positive active material of the positive electrode plate comprising a specific element, the stability of the positive active material is enhanced. In addition, a phosphorus additive is added into the electrolytic solution to protect the positive electrode plate, and an ester additive (a first additive to be mentioned later) is added into the electrolytic solution to protect the negative electrode plate, thereby enhancing the thermal stability of the cathode and anode electrode interphases. The performance of the electrochemical device in resisting thermal shocks is enhanced from three dimensions: the material of the positive electrode plate, the cathode electrode interphase, and the anode electrode interphase.

The electrochemical device according to an embodiment of this application includes a positive electrode plate, a negative electrode plate, and an electrolytic solution. The positive electrode plate includes a positive current collector and a positive active material layer disposed on a surface of the positive current collector. The negative electrode plate includes a negative current collector and a negative active material layer disposed on a surface of the negative current collector. The electrolytic solution is in contact with a positive active material layer and a negative active material layer separately, and performs ion exchange to enable charging and discharging of the electrochemical device.

In the electrochemical device, (1) the electrolytic solution includes a phosphorus additive represented by Formula I:

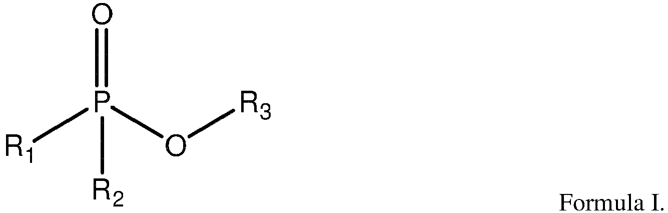

In the Formula I, R₁, R₂, and R₃ each are one independently selected from halogen, a cyano group, a sulfonic acid group, an aldehyde group, a silicon group, a substituted C₁ to C₆ alkoxy, an unsubstituted C₁ to C₆ alkoxy, a substituted C₁ to C₆ alkyl, an unsubstituted C₁ to C₆ alkyl, a substituted C₂ to C₆ alkenyl, an unsubstituted C₂ to C₆ alkenyl, a substituted C₂ to C₆ alkynyl, an unsubstituted C₂ to C₆ alkynyl, a substituted C₆ to C₁₂ aryl, or an unsubstituted C₆ to C₁₂ aryl, where when substituted, a substituent is halogen.

A mass percent of the phosphorus additive represented by Formula I in the electrolytic solution is A%.

(2) The electrolytic solution further includes a first additive. The first additive includes at least one of fluoroethylene carbonate (FEC) or vinylene carbonate (VC).

(3) The positive active material layer includes a positive active material. The positive active material includes an M element. The M element includes at least one of Al, Mg, Ti, or B; a mass percent of the M element in the positive active material is X%; and A and X satisfy the following condition: 0.0001 ≤ X/A ≤ 40. When the X/A ratio is greater than 40 or the X/A ratio is less than 0.0001, the stability of the electrochemical device in resisting thermal shocks is reduced, being hardly able to meet the requirement on the thermal shock stability.

The phosphorus additive represented by Formula I is added in the electrolytic solution to form a thermally stable inorganic cathode electrolyte interphase (CEI) film at a cathode electrode interphase to inhibit decomposition of the electrolytic solution in a high-temperature environment. Together with the first additive added in the electrolytic solution, the phosphorus additive can simultaneously inhibit the disruption caused by the metal deposition at an anode electrode interphase to the solid-electrolyte interphase (SEI) film. In addition, the positive active material with the M element can improve lattice stability of the positive active material and inhibit corrosion of the positive electrode material caused by acidic substances generated after decomposition of the phosphorus additive. The phosphorus additive represented by Formula I, the first additive, and the M element coordinate synergistically to improve the thermal stability of the electrochemical device under a high temperature.

In some embodiments, the phosphorus additive represented by Formula I includes at least one of the following compounds:

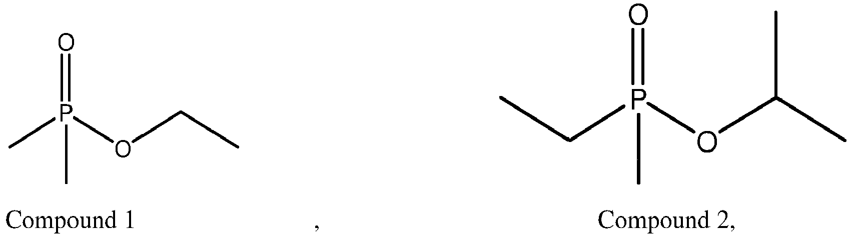

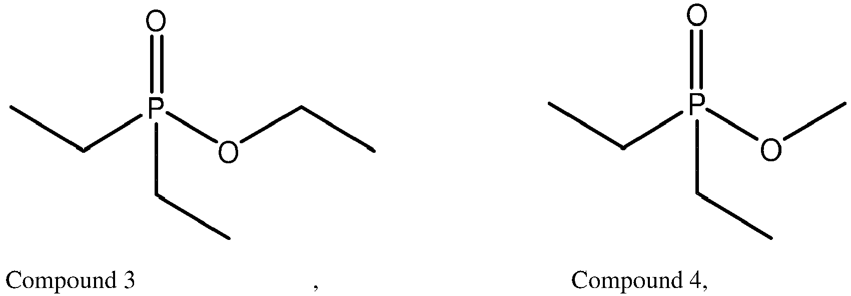

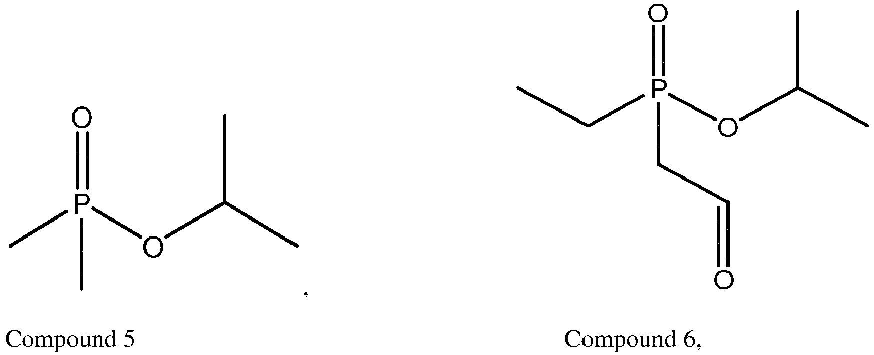

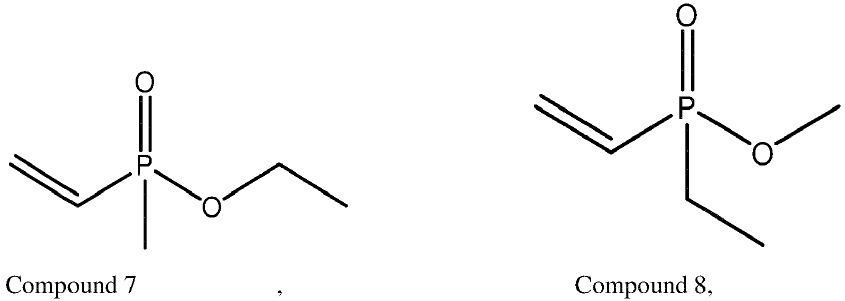

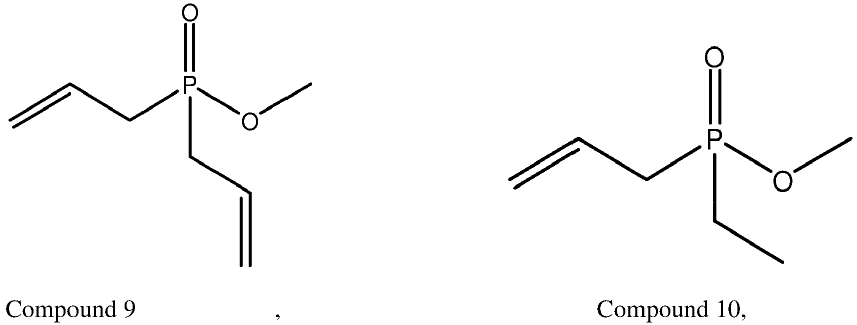

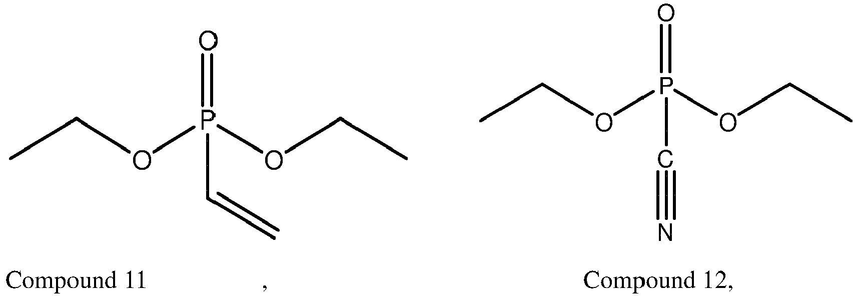

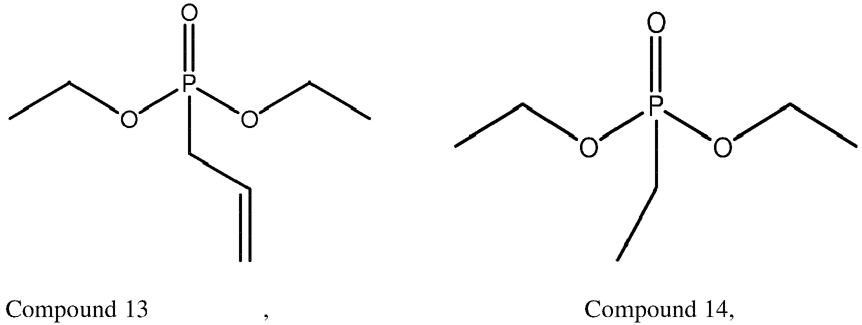

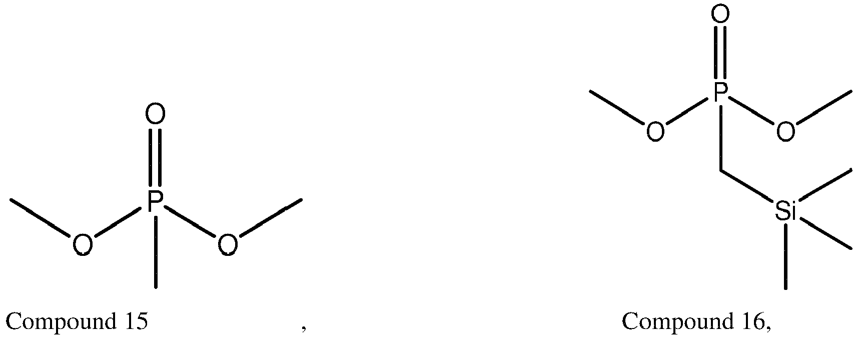

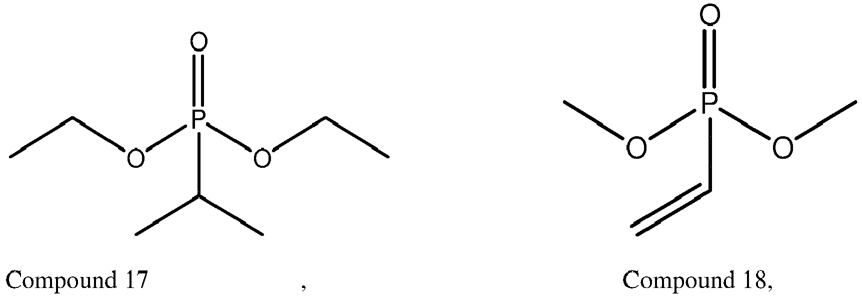

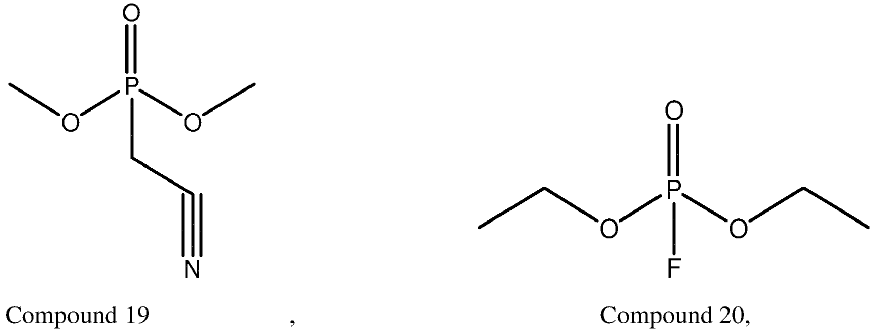

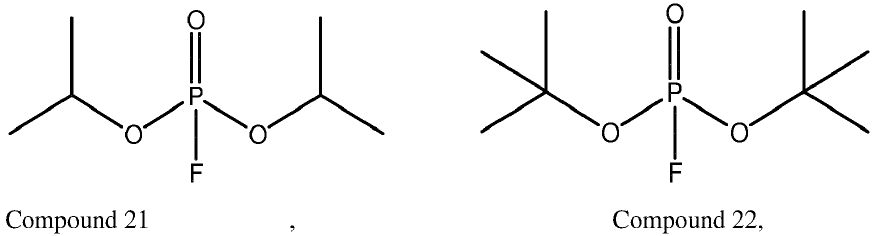

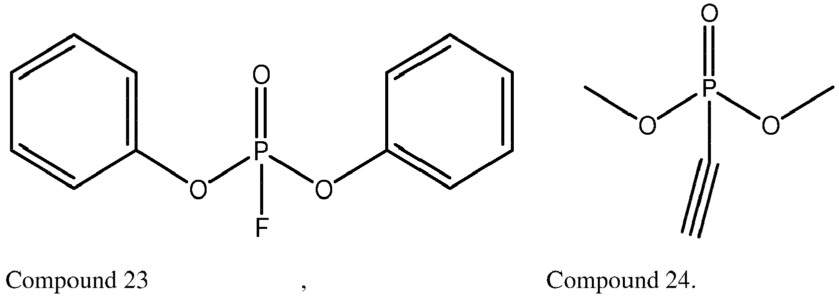

In some embodiments, the mass percent A% of the phosphorus additive represented by Formula I in the electrolytic solution satisfies the following condition: 0.05 ≤ A ≤ 10, for example, may be 0.05, 2, 4, 5, 6, 7, 8, or 10. When the mass percent A% of the phosphorus additive represented by Formula I in the electrolytic solution is less than 0.05%, the phosphorus additive represented by Formula I is unable to effectively form an inorganic CEI film at the cathode electrode interphase, thereby making limited improvement in resistance to thermal shocks. When the mass percent A% of the phosphorus additive represented by Formula I in the electrolytic solution is higher than 10%, the high-content phosphorus additive represented by Formula I decomposes in the electrochemical device to produce a large amount of acidic substances, promotes decomposition of the conductive lithium salt to generate heat, corrodes the positive active material, impairs the thermal stability of the positive active material, and in turn, impairs the performance of the electrochemical device in resisting thermal shocks.

In some embodiments, the electrolytic solution further includes a second additive. The second additive includes at least one of polynitrile compounds. A number of cyano groups in the polynitrile compounds is 2 to 4. The second additive can be adsorbed onto the cathode electrode interphase to effectively protect the positive active material and reduce side reactions at the cathode electrode interphase.

In some embodiments, the polynitrile compounds include at least one of a dinitrile or a trinitrile.

Optionally, the dinitrile includes at least one of succinonitrile, glutaronitrile, adiponitrile, pimelonitrile, suberonitrile, 1,5-dicyanopentane, 1,6-dicyanohexane, tetramethylsuccinonitrile, or ethylene glycol bis(propionitrile) ether.

Optionally, the trinitrile includes at least one of 1,3,5-pentanetricarbonitrile, 1,2,3-propanetricarbonitrile, 1,3,6-hexanetricarbonitrile, 1,2,6-hexanetricarbonitrile, or 1,2,3-tris(2-cyanoethoxy)propane.

In some embodiments, a mass percent of the second additive in the electrolytic solution is C%, and C satisfies the following condition: 0.5 ≤ C ≤ 10. For example, C may be 0.5, 1, 3, 5, 7, 8, 9, or 10. When the mass percent C% of the second additive in the electrolytic solution is less than 0.5%, the second additive is not enough to meet the requirement of optimizing the thermal stability of the electrochemical device. When the mass percent C% of the second additive in the electrolytic solution is greater than 10%, the content of the second additive is excessive, and hard to bring more optimization for the thermal stability of the electrochemical device, thereby resulting in waste.

Under high-temperature conditions, both the phosphorus additive represented by Formula I and the second additive deteriorate the anode electrode interphase to varying degrees. The first additive can inhibit disruption of the SEI film at the negative electrode caused by metal deposition at the anode electrode interphase. Therefore, the mass percent of the phosphorus additive, the first additive, and the second additive needs to be controlled to fall within an appropriate range. In some embodiments, a mass percent of the first additive in the electrolytic solution is B%, and A, B, and C satisfy the following condition: A + C ≤ 2B. When the sum of A and C is greater than 2B, the content of the first additive is not enough to provide sufficient protection for the anode electrode interphase.

In some embodiments, the negative active material layer includes a negative active material. The negative active material includes a silicon material and a carbon material on a surface of the silicon material. A silicon-based material expands greatly in volume during lithiation. Excessive expansion leads to exposure of a new surface of the active material and gives rise to more side reactions. The structure described above can effectively alleviate the expansion of the silicon-based active material.

In some embodiments, the silicon material includes at least one of elemental silicon, a silicon-carbon composite, or a silicon-oxygen composite.

In some embodiments, the carbon material includes graphite. Graphite itself can provide a specific lithiation capacity. Used as a cushion layer, the graphite is relatively stable in structure, and can withstand continuous expansion and shrinkage of the silicon-based material. In some embodiments, the graphite includes at least one of artificial graphite or natural graphite.

The electrolytic solution further includes a lithium salt and a nonaqueous organic solvent.

The lithium salt is not particularly limited herein, and the lithium salt may be any lithium salt well known in the art as long as the purposes of this application can be achieved. For example, the lithium salt may include at least one of LiTFSI, LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, or LiPO₂F₂.

The nonaqueous solvent is not particularly limited herein either as long as the purposes of this application can be achieved. For example, the nonaqueous solvent may include at least one of a carbonate compound, a carboxylate compound, an ether compound, another organic solvent, or the like. For example, the carbonate compound may include at least one of ethylene carbonate (EC), diethyl carbonate (DEC), dimethyl carbonate (DMC), dipropyl carbonate (DPC), methyl propyl carbonate (MPC), ethylene propyl carbonate (EPC), ethyl methyl carbonate (MEC), propylene carbonate (PC), butylene carbonate (BC), vinyl ethylene carbonate (VEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or the like.

The positive active material is not particularly limited herein as long as the purposes of this application can be achieved. For example, the positive active material may include at least one of lithium cobalt oxide, lithium manganese oxide, lithium iron phosphate, lithium iron manganese phosphate, lithium nickel cobalt manganese oxide, lithium nickel cobalt aluminum oxide, or lithium nickel manganese oxide.

The positive active material layer further includes a positive conductive agent and/or a positive binder. The positive conductive agent is not particularly limited herein as long as the purposes of this application can be achieved. For example, the positive conductive agent may include at least one of conductive carbon black, acetylene black, Ketjen black, graphite sheets, graphene, carbon nanotubes, or carbon fibers. The positive binder is not particularly limited herein as long as the purposes of this application can be achieved. For example, the positive binder may include at least one of polyvinylidene fluoride, poly(vinylidene fluoride-co-hexafluoropropylene), polyacrylonitrile, polyacrylate, polyacrylic acid, polyacrylic acid sodium salt, poly(styrene-co-acrylate), poly(styrene-co-butadiene), polyamide, sodium carboxymethyl cellulose, polyvinyl acetate, polyvinylpyrrolidone, polyvinyl ether, polytetrafluoroethylene, polyhexafluoropropylene, or polymethyl methacrylate.

The positive current collector is not particularly limited in this application. The positive current collector may be any positive current collector well known in the art such as an aluminum foil, an aluminum alloy foil, or a composite current collector.

The negative active material is not particularly limited herein as long as the purposes of this application can be achieved. For example, the negative active material may include at least one of crystalline carbon, non-crystalline carbon, silicon, a silicon-oxygen compound, a silicon-carbon compound, or a silicon alloy.

The negative active material layer may further include a negative conductive agent and/or a negative binder. The negative conductive agent is not particularly limited herein as long as the purposes of this application can be achieved. For example, the negative conductive agent may include at least one of carbon black, acetylene black, Ketjen black, graphite sheets, graphene, carbon nanotubes, carbon fibers, or carbon nanowires. The negative binder is not particularly limited herein as long as the purposes of this application can be achieved. For example, the negative binder may include at least one of carboxymethyl cellulose (CMC), polyacrylic acid, polyacrylic acid sodium salt, polyacrylate, polyvinylpyrrolidone, polyaniline, polyimide, polyamide imide, polysiloxane, styrene-butadiene rubber, epoxy resin, polyester resin, polyurethane resin, or polyfluorene.

The negative current collector is not particularly limited herein as long as the purposes of this application can be achieved. For example, the negative current collector may include at least one of a copper foil, a nickel foil, or a carbon-based current collector.

The electrochemical device further includes a separator. The separator is disposed between the positive electrode plate and the negative electrode plate to prevent a short circuit between the positive electrode plate and the negative electrode plate. The separator may include a polyethylene (PE) film or a polypropylene (PP) film. The electrochemical device further includes a positive tab, a negative tab, and an outer package. After the positive electrode plate, the separator, and the negative electrode plate are stacked sequentially or are stacked on one side and wound, the positive electrode plate is connected to the positive tab, and the negative electrode plate is connected to the negative tab to form an electrode assembly. The electrode assembly is disposed in an inner space of the outer package. The positive tab and the negative tab are led from the inner space of the outer package to the outer space of the outer package, so that the positive tab and the negative tab can be electrically connected to an external circuit. Subsequently, an electrolytic solution is injected into the inner space of the outer package, and the outer package is closed to form an electrochemical device. The outer package may be an aluminum plastic film outer package.

An embodiment of this application further provides an electronic device, including the electrochemical device.

The electronic device is not particularly limited in this application, and may be any electronic device known in the prior art. In some embodiments, the electronic device includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The following describes this application in more detail with reference to specific embodiments by using a lithium-ion battery as an example of the electrochemical device.

### I. Method for testing the performance of a lithium-ion battery

Thermal shock test: Charge a lithium-ion battery under test at a constant current of 0.5 C under a 25 °C condition until a voltage of 4.45 V, and then charge the battery at a constant voltage (CV) until a current of 0.025 C. Place the lithium-ion battery under test vertically in a box, heat up the battery to a specified temperature at a speed of 5±2 °C/min,, and hold on for 100 minutes. A criterion for determining pass of the test is: The lithium-ion battery under test does not catch fire or explode during 100-minute constant-temperature storage. The batteries are tested in groups, each group containing 3 batteries. If all 3 batteries pass the test, it is considered that this group of lithium-ion batteries passes the thermal shock test under the specified temperature.

### II. Method for preparing a lithium-ion battery

### 1. Preparing a positive electrode plate

Dissolve lithium cobalt oxide (molecular formula: LiCoO₂) as a positive active material, polyvinylidene difluoride (PVDF) as a positive binder, and conductive carbon black (Super-P) as a positive conductive agent in N-methyl-pyrrolidone (NMP) at a mass ratio of 96: 2: 2. Mix the ingredients well to make a positive slurry. Coat a 12 µm-thick positive current collector aluminum foil with the positive slurry evenly, bake the aluminum foil at 120 °C for 1 hour, and then perform compaction and cutting to obtain a positive electrode plate.

In each embodiment and comparative embodiment, add the M element into the positive slurry, and stir evenly. Coat a foil with the slurry according to the foregoing steps to obtain a positive electrode plate with the M element.

### 2. Preparing a negative electrode plate

Dissolve artificial graphite (or natural graphite and a silicon-carbon composite) as a negative active material, sodium carboxymethylcellulose (CMC) as a negative binder, and styrene-butadiene rubber as a negative binder in water at a mass ratio of 85: 2: 13. Mix and stir well to obtain a negative slurry. Coat a 12 µm-thick negative current collector copper foil with the negative slurry evenly. Bake the copper foil at 120 °C for 1 hour to obtain a negative electrode plate, and then perform compaction and cutting to obtain a negative electrode plate.

### 3. Preparing an electrolytic solution

Mix ethylene carbonate and diethyl carbonate at a mass ratio of 3: 7, and add LiPF₆ at a concentration of 1 mol/L into the mixture to obtain an base electrolyte.

In each embodiment and comparative embodiment, add the phosphorus additive represented by Formula I, the first additive, and the second additive into the base electrolyte correspondingly to obtain an electrolytic solution.

### 4. Preparing a lithium-ion battery

Use a polypropylene film as a separator. Stack the positive electrode plate, the separator, and the negative electrode plate in sequence, and position the separator between the positive electrode plate and the negative electrode plate to separate the positive electrode plate from the negative electrode plate, and then wind the stacked structure. Connect a positive tab to the positive electrode plate, and connect a negative tab to the negative electrode plate to obtain an electrode assembly. Put the electrode assembly into the inner space of the outer package, where the outer package is an aluminum foil packaging bag. Lead the positive tab and the negative tab from the inner space of the outer package to the outer space of the outer package. Bake the packaged electrode assembly at 80 °C to dehydrate, and inject an electrolytic solution into the inner space of the outer package. Perform steps such as vacuum packaging, standing, chemical formation, and shaping to obtain a lithium-ion battery.

The lithium-ion batteries in each embodiment and comparative embodiment are prepared according to the above method and tested.

In Comparative Embodiment 1-1 to Comparative Embodiment 1-2 and Embodiment 1-1 to Embodiment 1-9, the negative active material includes graphite, the electrolytic solution includes the phosphorus additive represented by Formula I and the first additive, and the positive active material includes anelement Al. The mass percent of the phosphorus additive represented by Formula I, the first additive, and the element Al is shown in Table 1.

**Table 1**

| Item | Phosphorus additive represented by Formula I | A(%) | First additive | B(%) | Element | x (%) | X/A | Thermal shock temperature (°C) |
|---|---|---|---|---|---|---|---|---|
| Comparative Embodiment 1-1 | Compound 7 | 2 | FEC | 2 | Al | 0.0005 | 0.00005 | 97 |
| Embodiment 1-1 | Compound 7 | 2 | FEC | 2 | Al | 0.0002 | 0.0001 | 109 |
| Embodiment 1-2 | Compound 7 | 2 | FEC | 2 | Al | 0.005 | 0.0025 | 110 |
| Embodiment 1-3 | Compound 7 | 0.5 | FEC | 2 | Al | 0.005 | 0.01 | 113 |
| Embodiment 1-4 | Compound 7 | 0.1 | FEC | 2 | Al | 0.005 | 0.05 | 115 |
| Embodiment 1-5 | Compound 7 | 0.05 | FEC | 2 | Al | 0.05 | 1 | 121 |
| Embodiment 1-7 | Compound 7 | 0.05 | FEC | 2 | Al | 0.8 | 16 | 114 |
| Embodiment 1-8 | Compound 7 | 0.05 | FEC | 2 | Al | 1.5 | 30 | 113 |
| Embodiment 1-9 | Compound 7 | 0.05 | FEC | 2 | Al | 2 | 40 | 110 |
| Comparative Embodiment 1-2 | Compound 7 | 0.05 | FEC | 2 | Al | 2.2 | 44 | 100 |

In Table 1, according to Comparative Embodiment 1-1 and Comparative Embodiment 1-2, when the X/A ratio is greater than 40 or less than 0.0001, the performance of the lithium-ion battery in resisting thermal shocks is inferior, and the lithium-ion battery fails just at a relatively low temperature. By contrast, in Embodiment 1-1 to Embodiment 1-9, the lithium-ion battery exhibits relatively high performance in resisting thermal shocks because a synergistic effect is exerted between the phosphorus additive represented by Formula I and the M element in the positive active material. The phosphorus additive represented by Formula I can be decomposed into a CEI film at the positive electrode interphase, and increase the content of inorganic compounds in the CEI film. The inorganic compounds in the CEI film are not prone to decompose under high-temperature conditions, thereby improving the performance of the electrochemical device in resisting thermal shocks. The M element added in the positive active material can strengthen the stability of the positive active material and enhance the performance of resistance to thermal shocks. However, the phosphorus additive represented by Formula I is prone to decompose to generate acidic substances under high-temperature conditions, and is corrosive to the positive active material to some extent. Therefore, the ratio of the phosphorus additive represented by Formula I to the M element needs to be controlled to fall within a specified range to exert the maximum effect of the phosphorus additive represented by Formula I and the M element, and enhance the performance of resistance to thermal shocks significantly.

In Comparative Embodiment 2-1 to Comparative Embodiment 2-2 and Embodiment 2-1 to Embodiment 2-17, the negative active material includes graphite, and the electrolytic solution includes the phosphorus additive represented by Formula I and the first additive. The first additive is FEC, and the mass percent B% of FEC is 2%. The positive active material includes an element Al, and the mass percent X% of the elementAl is 0.005%. The mass percen A% of the phosphorus additive represented by Formula I in each embodiment and comparative embodiment is shown in Table 2.

**Table 2**

| Item | Phosphorus additive represented by Formula I | A(%) | Thermal shock temperature (°C) |
|---|---|---|---|
| Comparative Embodiment 2-1 | Compound 7 | 0.01 | 108 |
| Embodiment 2-1 | Compound 7 | 0.05 | 110 |
| Embodiment 1-4 | Compound 7 | 0.1 | 115 |
| Embodiment 2-2 | Compound 7 | 1 | 116 |
| Embodiment 2-3 | Compound 7 | 3 | 117 |
| Embodiment 2-4 | Compound 7 | 5 | 115 |
| Embodiment 2-5 | Compound 7 | 10 | 110 |
| Comparative Embodiment 2-2 | Compound 10 | 11 | 103 |
| Embodiment 2-6 | Compound 11 | 1 | 119 |
| Embodiment 2-7 | Compound 13 | 1 | 121 |
| Embodiment 2-8 | Compound 14 | 1 | 115 |
| Embodiment 2-9 | Compound 17 | 1 | 124 |
| Embodiment 2-10 | Compound 19 | 1 | 123 |
| Embodiment 2-11 | Compound 20 | 1 | 115 |
| Embodiment 2-12 | Compound 22 | 1 | 126 |
| Embodiment 2-13 | Compound 11 + compound 13 | 1+1 | 119 |
| Embodiment 2-14 | Compound 14 + compound 16 | 1+1 | 125 |
| Embodiment 2-15 | Compound 17 + compound 3 | 1+1 | 124 |
| Embodiment 2-16 | Compound 14 + compound 6 | 1+1 | 129 |
| Embodiment 2-17 | Compound 11 + compound 3 + compound 18 | 1+1+1 | 125 |

In Table 2, by adding one or more of the phosphorus additives represented by Formula I into the electrolytic solution, the purpose of improving the performance of the lithium-ion battery in resisting thermal shocks can be achieved. In Comparative Embodiment 2-1, when the mass percent of the additive represented by Formula I is less than 0.05%, the low-content phosphorus additive represented by Formula I is unable to effectively form an inorganic CEI film at the cathode electrode interphase, and the improvement in the performance of resistance to thermal shocks is limited. In Comparative Embodiment 2-2, when the mass percent of the additive represented by Formula I is higher than 10%, the high-content phosphorus additive represented by Formula I decomposes in the lithium-ion battery to produce a large amount of acidic substances, promotes decomposition of the conductive lithium salt in the electrolytic solution to generate heat, corrodes the positive and negative active materials, impairs the thermal stability of the positive and negative active materials, and in turn, impairs the performance of the lithium-ion battery in resisting thermal shocks.

In Comparative Embodiment 3-1 to Comparative Embodiment 3-2 and Embodiment 3-1 to Embodiment 3-11, the negative active material includes graphite, and the electrolytic solution includes the phosphorus additive represented by Formula I and the first additive. The phosphorus additive represented by Formula I is a compound 13, and the mass percent A% of the compound 13 is 1%. The first additive is FEC, and the mass percent B% of FEC is 2%. The positive active material includes an element Al, and the mass percent X% of the element Al is 0.005%. The electrolytic solution in each embodiment and comparative embodiment further includes a second additive, and the mass percent of the second additive is shown in Table 3.

**Table 3**

| Item | Second additive | C (%) | Thermal shock temperature (°C) |
|---|---|---|---|
| Embodiment 2-7 | / | / | 121 |
| Embodiment 3-1 | Succinonitrile | 0.1 | 121 |
| Embodiment 3-2 | Succinonitrile | 0.5 | 122 |
| Embodiment 3-3 | Succinonitrile | 1 | 126 |
| Embodiment 3-4 | Succinonitrile | 3 | 127 |
| Embodiment 3-5 | Succinonitrile | 5 | 131 |
| Embodiment 3-6 | Succinonitrile | 10 | 132 |
| Embodiment 3-7 | Succinonitrile | 12 | 132 |
| Embodiment 3-8 | Succinonitrile + adiponitrile | 1+1 | 126 |
| Embodiment 3-9 | Adiponitrile + 1,2,3-propanetricarbonitrile | 1+1 | 127 |
| Embodiment 3-10 | 1,3,6-hexanetricarbonitrile + 1,2,3-tris(2-cyanoethoxy)propane | 1+1 | 127 |
| Embodiment 3-11 | 1,2,6-hexanetricarbonitrile + adiponitrile | 1+1 | 128 |
| Embodiment 3-12 | Succinonitrile + adiponitrile + 1,3,6-hexanetric arbonitrile | 1+1+2 | 128 |
| Embodiment 3-13 | Suberonitrile + adiponitrile + 1,2,6-hexanetric arbonitrile | 1+1+3 | 129 |

In Embodiment 3-1 to Embodiment 3-11, the second additive is added on the basis of Embodiment 2-7. The second additive is an effective positive electrode protection additive, and can be adsorbed onto the cathode electrode interphase to reduce side reactions at the cathode electrode interphase. In Embodiment 3-1, when the mass percent of the second additive is relatively low, no effective protection is implemented for the positive electrode plate. By contrast, in Embodiment 3-7, when the mass percent of the second additive is excessive, no more improvement is made in the stability to thermal shocks on the lithium-ion battery. Therefore, a preferred range of the second additive is 0.5% ≤ C% ≤ 10%.

In Comparative Embodiment 4-1 to Comparative Embodiment 4-4 and Embodiment 4-1 to Embodiment 4-5, the negative active material includes graphite, and the positive active material includes an element Al. The mass percent X% of Al is 0.005%. The electrolytic solution includes the phosphorus additive represented by Formula I, the first additive, and the second additive. The type and mass percent of the phosphorus additive represented by Formula I, the first additive, and the second additive are shown in Table 4.

**Table 4**

| | Additive represented by Formula I | A (%) | First additive | B (%) | Second additive | C (%) | A + C ≤ 2B | Thermal shock temperature (°C) |
|---|---|---|---|---|---|---|---|---|
| Embodiment 3-10 | Compound 13 | 1 | FEC | 2 | 1,3,6-hexanetricarbonitrile + 1,2,3-tris(2-cyanoethoxy)propane | 2 | Yes | 127 |
| Embodiment 4-1 | Compound 21 | 1 | FEC + VC | 2+2 | Adiponitrile | 1 | Yes | 121 |
| Embodiment 4-2 | Compound 21 | 2 | FEC + VC | 2+2 | Adiponitrile | 1 | Yes | 123 |
| Embodiment 4-3 | Compound 21 | 1 | FEC + VC | 2+2 | Adiponitrile | 0.5 | Yes | 120 |
| Embodiment 4-4 | Compound 21 | 1 | FEC + VC | 2+2 | Adiponitrile | 3 | Yes | 129 |
| Embodiment 4-5 | Compound 21 | 1 | FEC + VC | 1+1 | Adiponitrile | 1 | Yes | 121 |
| Comparative Embodiment 4-1 | Compound 21 | 1 | FEC + VC | 0.3+0.3 | Adiponitrile | 1 | No | 108 |
| Comparative Embodiment 4-2 | Compound 21 | 1 | FEC | 0.1 | Adiponitrile | 1 | No | 110 |
| Comparative Embodiment 4-3 | Compound 21 | 1 | VC | 0.5 | Adiponitrile | 1 | No | 107 |
| Comparative Embodiment 4-4 | Compound 21 | 1 | FEC | 4 | Adiponitrile | 8 | No | 108 |

In Table 4, according to Embodiment 4-1 to Embodiment 4-5, when A, B, and C satisfy the relation A + C ≤ 2B, the performance of the lithium-ion battery in resisting thermal shocks is relatively high. When the value of A+C is excessive and greater than 2B, the performance of the lithium-ion battery in resisting thermal shocks will be influenced. The first additive is an effective negative electrode film-forming (that is, SEI film) additive. The phosphorus additive represented by Formula I and the second additive deteriorate the anode electrode interphase to different degrees under high-temperature conditions. Therefore, in Comparative Embodiment 4-1 to Comparative Embodiment 4-4, when the mass percent of the phosphorus additive represented by Formula I and the second additive is relatively high and no effective negative electrode protection additive (that is, the first additive) is available for protection, the negative electrode plate will fail early in the thermal shock test, and in turn, the thermal shock test will be influenced.

In Embodiment 5-1 to Embodiment 5-3, the electrolytic solution includes the phosphorus additive represented by Formula I and the first additive. The phosphorus additive represented by Formula I is a compound 7, and the mass percent A% of the compound 7 is 2%. The first additive is FEC, and the mass percent B% of FEC is 2%. The positive active material includes an element Al, and the mass percent X% of the element Al is 0.002 %. The specific type and mass percent of the negative active material are shown in Table 5.

**Table 5**

| Item | Negative active material | Thermal shock temperature (°C) |
|---|---|---|
| Embodiment 1-1 | Artificial graphite | 109 |
| Embodiment 5-1 | Silicon-carbon composite | 113 |
| Embodiment 5-2 | 20 wt% silicon-carbon composite + 80 wt% artificial graphite | 118 |
| Embodiment 5-3 | 30 wt% silicon-carbon composite + 70 wt% artificial graphite | 120 |

In Table 5, as can be seen from Embodiments 5-1 to 5-3 and Embodiment 1-1, when the negative active material includes a silicon material and graphite, the performance of the lithium-ion battery in resisting thermal shocks is enhanced to some extent.

In the description of this application, a list of items referred to by the terms such as "at least one of", "at least one thereof" and other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C.

In the description of this application, understandably, a direction or a positional relationship indicated by the terms such as "up", "down", "left", and "right" is merely intended for ease of describing this application and for brevity of the description, but not intended to indicate or imply that the indicated device or component is necessarily located in the specified position or constructed or operated in the specified direction or position. Therefore, the terms depicting the positional relationship are for illustration only, but not to be understood as any limitation on this patent. A person of ordinary skill in the art may understand the specific meanings of such terms depending on specific situations.

The foregoing descriptions are merely embodiments of this application, but are not intended to limit this application. Any modifications, equivalent substitutions, and improvements made without departing from the principles of this application still fall within the protection scope of this application.

## Claims

1. An electrochemical device, compring a positive electrode plate and an electrolytic solution; wherein,
the electrolytic solution comprises a phosphorus additive, and the phosphorus additive is at least one selected from compounds represented by Formula I: 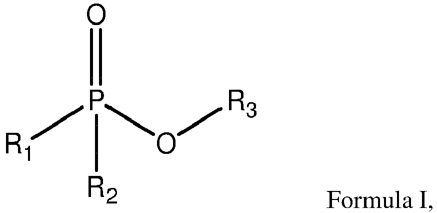
in the Formula I, R₁, R₂, and R₃ each are one independently selected from halogen, a cyano group, a sulfonic acid group, an aldehyde group, a silicon group, a substituted C₁ to C₆ alkoxy, an unsubstituted C₁ to C₆ alkoxy, a substituted C₁ to C₆ alkyl, an unsubstituted C₁ to C₆ alkyl, a substituted C₂ to C₆ alkenyl, an unsubstituted C₂ to C₆ alkenyl, a substituted C₂ to C₆ alkynyl, an unsubstituted C₂ to C₆ alkynyl, a substituted C₆ to C₁₂ aryl, or an unsubstituted C₆ to C₁₂ aryl, wherein when substituted, a substituent is halogen;
a mass percent of the phosphorus additive represented by Formula I in the electrolytic solution is A%;
the electrolytic solution further comprises a first additive, and the first additive comprises at least one of fluoroethylene carbonate or vinylene carbonate; and
the positive electrode plate comprises a positive active material; the positive active material comprises an M element; the M element comprises at least one of Al, Mg, Ti, or B; a mass percent of the M element in the positive active material is X%; and 0.0001 ≤ X/A ≤ 40.

2. The electrochemical device according to claim 1, wherein R₁, R₂, and R₃ each are one independently selected from an F element, the unsubstituted C₁ to C₆ alkoxy, the substituted C₁ to C₆ alkyl, the unsubstituted C₁ to C₆ alkyl, the substituted C₂ to C₆ alkenyl, or the unsubstituted C₂ to C₆ alkenyl, wherein when substituted, a substituent is the F element.

3. The electrochemical device according to claim 1 or 2, wherein the phosphorus additive comprises at least one of the following compounds:

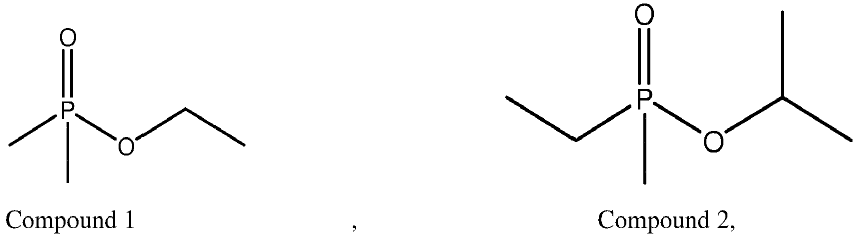

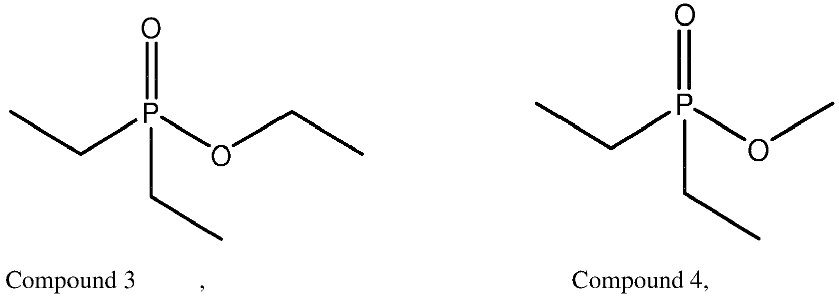

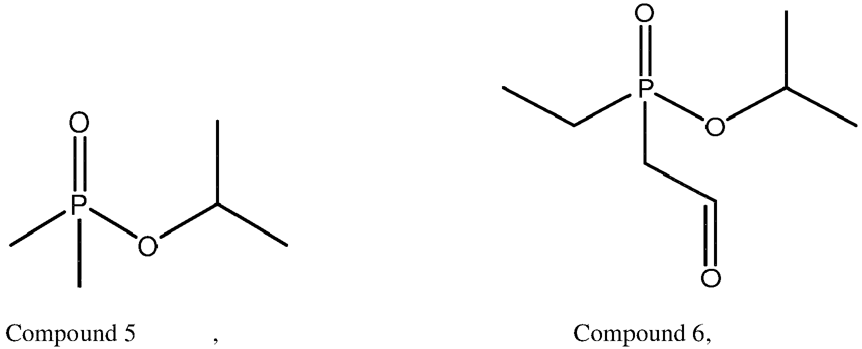

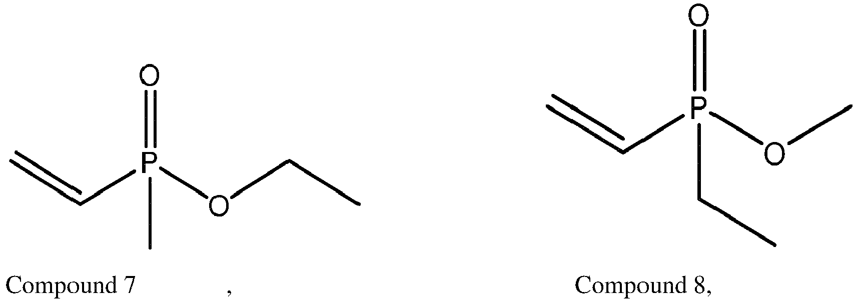

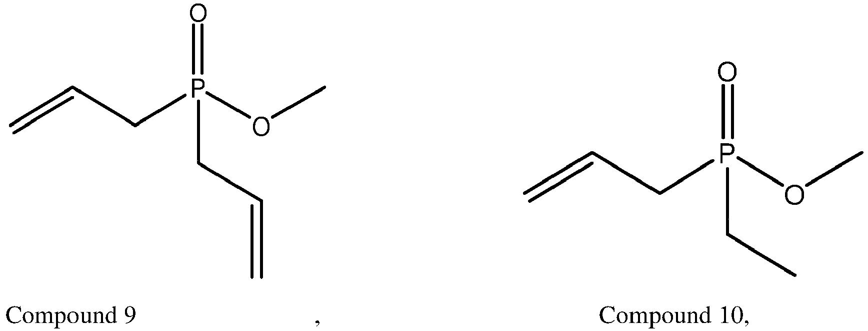

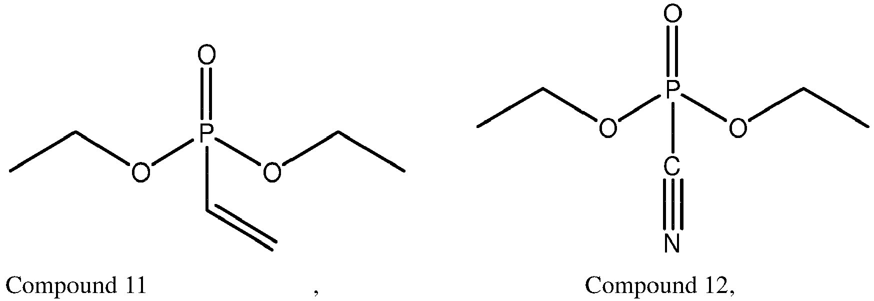

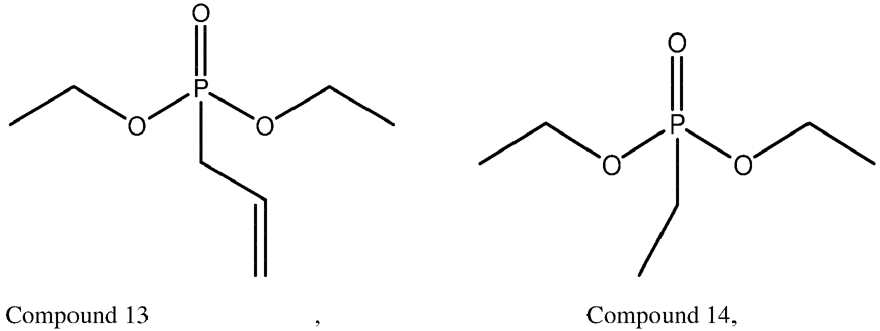

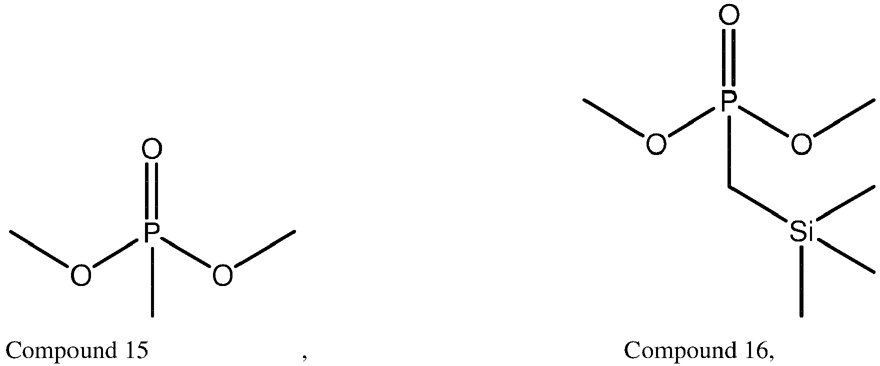

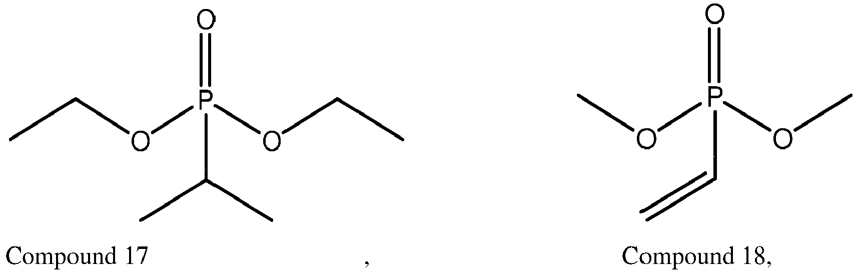

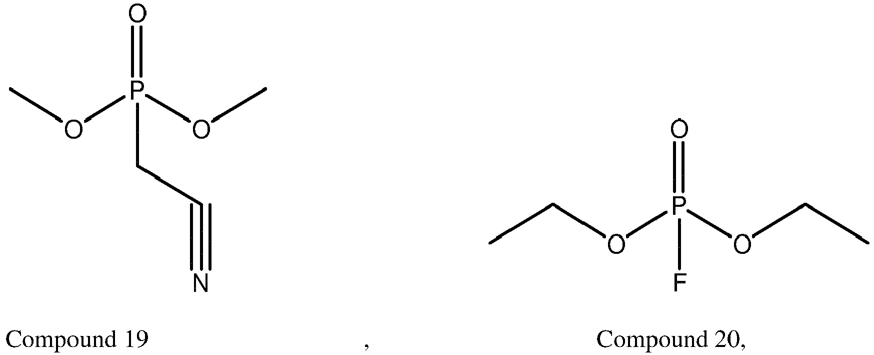

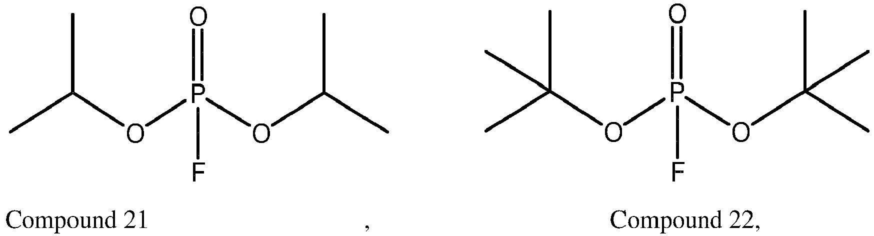

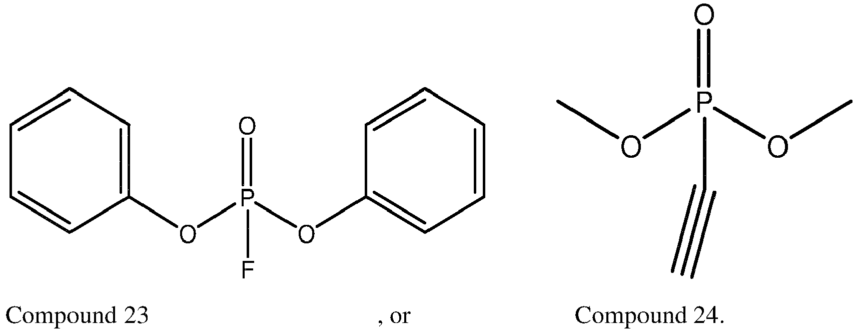

4. The electrochemical device according to any one of claims 1 to 3, wherein 0.05 ≤ A ≤ 10.

5. The electrochemical device according to any one of claims 1 to 4, wherein the electrolytic solution further comprises a second additive, and the second additive comprises at least one of polynitrile compounds; and
a number of cyano groups in the polynitrile compounds is 2 to 4.

6. The electrochemical device according to claim 5, wherein the polynitrile compounds comprise at least one of a dinitrile or a trinitrile;
the dinitrile comprises at least one of succinonitrile, glutaronitrile, adiponitrile, pimelonitrile, suberonitrile, 1,5-dicyanopentane, 1,6-dicyanohexane, tetramethylsuccinonitrile, or ethylene glycol bis(propionitrile) ether; and
the trinitrile comprises at least one of 1,3,5-pentanetricarbonitrile, 1,2,3-propanetricarbonitrile, 1,3,6-hexanetricarbonitrile, 1,2,6-hexanetricarbonitrile, or 1,2,3-tris(2-cyanoethoxy)propane.

7. The electrochemical device according to claim 5 or 6, wherein a mass percent of the second additive in the electrolytic solution is C%, and 0.5 ≤ C ≤ 10.

8. The electrochemical device according to claim 7, wherein a mass percent of the first additive in the electrolytic solution is B%, and A + C ≤ 5B.

9. The electrochemical device according to any one of claims 1 to 8, wherein the electrochemical device further comprises a negative electrode plate, the negative electrode plate comprises a negative active material; and the negative active material comprises a silicon material and a carbon material on a surface of the silicon material.

10. The electrochemical device according to claim 9, wherein the carbon material comprises graphite.

11. The electrochemical device according to claim 10, wherein the graphite comprises at least one of artificial graphite or natural graphite.

12. The electrochemical device according to claim 9, wherein the silicon material comprises at least one of elemental silicon, a silicon-carbon composite, or a silicon-oxygen composite.

13. The electrochemical device according to any one of claims 5 to 12, wherein the second additive comprises at least one of succinonitrile, glutaronitrile, adiponitrile, pimelonitrile, suberonitrile, 1,5-dicyanopentane, 1,6-dicyanohexane, tetramethylsuccinonitrile, or ethylene glycol bis(propionitrile).

14. The electrochemical device according to any one of claims 5 to 13, wherein the second additive comprises at least one of 1,3,5-pentanetricarbonitrile, 1,2,3-propanetricarbonitrile, 1,3,6-hexanetricarbonitrile, 1,2,6-hexanetricarbonitrile, or 1,2,3-tris(2-cyanoethoxy)propane.

15. An electronic device, wherein the electronic device comprises:
the electrochemical device according to any one of claims 1 to 14.
